# EUROPEAN PATENT SPECIFICATION

(11) **EP 2 447 305 B1**
(45) Date of publication and mention of the grant of the patent: **31.07.2013**
(21) Application number: 11186006.0
(22) Date of filing: 20.10.2011
(51) Int. Cl.: C08J 5/04, C08J 5/24, D04B 1/04, D04B 21/16, B29B 11/16, B29C 70/22, B32B 27/38, B32B 15/092, B32B 17/10, D04H 1/45

(54) **Polyetherimide Stitched Reinforcing Fabrics And Composite Materials Comprising The Same**
Polyetherimidgeheftete Verstärkungsgewebe und Verbundmaterialien damit
Tissus renforcés piqués de polyéthérimide et matériaux composites les comportant

(30) Priority: 28.10.2010 US 914434
(43) Date of publication of application: 02.05.2012
(73) Proprietor: General Electric Company, Schenectady, NY 12345 (US); The Boeing Company, Chicago, IL 60606 (US)
(72) Inventor: Fang, Xiaomei, Niskayuna, NY New York 12309 (US); Lin, Wendy Wen-Ling, Niskayuna, NY New York 12309 (US); Susarla, Prameela, Niskayuna, NY New York 12309 (US); Woods, Jack Allen, Kent, WA Washington 98031 (US)
(74) Representative: Szary, Anne Catherine

(56) References cited:
- EP-A1- 0 373 871
- EP-A2- 1 473 132
- WO-A1-2005/118263
- US-A1- 2008 227 352
- DATABASE WPI Week 200576 Thomson Scientific, London, GB; AN 2005-737594 XP002666125, & JP 2005 272526 A (TORAY IND INC) 6 October 2005 (2005-10-06)

## Description

### BACKGROUND

The invention relates to a cured composite composition. Further, the invention relates to reinforced composite compositions made employing vacuum assisted resin transfer methods.

Fiber reinforced composite materials are typically lightweight but high strength materials displaying excellent rigidity, shock resistance, fatigue resistance and other desirable mechanical properties. Frequently, such fiber reinforced composite materials display excellent corrosion resistance as well. Fiber reinforced composite materials are used in a wide variety of applications including aircraft, spacecraft, automobiles, railroad vehicles, ships, construction materials, sporting goods, and other applications in commerce and technology in which a combination of high strength and light weight is desirable.

The traditional way to produce fiber reinforced composite parts with specific properties such as high strength has usually been to use prepreg tapes. However, the process of employing prepreg tapes is not very cost effective. In recent years an alternate way to manufacture reinforced composites with continuous fibers has emerged, which involves the orientation of the reinforcement being set in the composite manufacturing stage by stitching several layers of unidirectional piles of fibers. The fabrics thus produced are known as non-crimp fabrics as the fibers in the fabric are more or less without crimp. The non-crimp fabrics are preferred over woven fabrics because the fibers are straight and the fiber dominated composite properties such as tension and compression are enhanced. Furthermore, as it is possible to assemble several layers of unidirectional fibers in the manufacturing stage, the lay-up of the non-crimp fabric reinforcements is faster than the lay-up of prepreg tapes. Typically, the stitches employed in the non-crimp fabric industry are made of polyesters or nylon fibers. However, it is noticed that the composites employing non-crimp fabric with polyester or nylon stitches are susceptible to microcrack formations induced by residual stress in the resin pockets during the thermal humidity cycling. In addition, the microcracks thus formed propagate along the interface between stitches and resins, thereby resulting in a degradation of the properties of the composite material.

Several processes are known for the manufacture of the reinforced composite materials. In recent years vacuum assisted resin transfer molding processes have become widely used to prepare fiber reinforced composite materials. Despite the progress made in this area, further improvements are needed to in order to provide fiber reinforced composite materials comprising non-crimp fabrics, displaying the physical properties, performance enhancements, and high fiber volume required by more demanding applications such as aerospace, automobiles, railroad vehicles,. In addition there is a need to identify uncured materials systems which are readily and efficiently transformed into fiber reinforced non-crimp fabric composite materials using resin transfer molding processes. The present invention provides additional solutions to these and other challenges associated with composite compositions.

### BRIEF DESCRIPTION

JP 2005/272526 discloses a composite material is formed by laminating several sheets of reinforced-fiber base material, and solidifying the laminate by a matrix resin. The reinforced-fiber base material contains reinforced-fiber threads and auxiliary fiber threads.

WO 2005/118263 discloses a textile product comprising at least one layer of non-metallic fibers and metal cords. The textile fabric is characterized in that the metal cords are bonded to the layer of non-metallic fibers by means of stitches.

US 2008/0227352 discloses a knitted textile fabric for use in safety apparel, comprising a first yarn containing modacrylic fibers and a second yarn containing cellulosic fibers.

EP-A-1473132 discloses materials and methods for producing preform materials for impact-resistant composite materials suitable for liquid molding. An interlayer comprising a spunbonded, spunlaced, or mesh fabric is introduced between non-crimped layers of unidirectional reinforcing fibers to produce a preform for use in liquid-molding processes to produce composite materials.

EP-A-0373871 discloses a fabric for a printed circuit-board characterized in that it is composed of one or more fibers (1) selected from the group consisting of polyether ether ketone fiber, polyetherimide fiber and polysulphone fiber, and (2) glass fiber and a printed circuit-board employing the fabric as its base material.

In one aspect, the present invention provides a preform, comprising: (a) a reinforcing fabric layer; and (b) a polyetherimide fiber incorporated into the reinforcing fabric layer as a stitch thread material, wherein the reinforcing fabric layer comprises less than 10% by weight polyetherimide.

In another aspect, the present invention provides an uncured composite composition, comprising: (a) a reinforcing fabric layer; (b) a polyetherimide fiber incorporated into the reinforcing fabric layer as a stitch thread material; and (c) an uncured epoxy resin, wherein the reinforcing fabric layer comprises less than 10% by weight polyetherimide.

In yet another aspect, the present invention provides a method comprising: (a) contacting a formulation comprising an uncured epoxy resin with a reinforcing fabric layer to provide an uncured composite composition, wherein the reinforcing fabric layer comprises a polyetherimide fiber incorporated therein as a stitch thread material, and wherein the reinforcing fabric layer comprises less than 10% by weight polyetherimide.

These and other features, aspects, and advantages of the present invention may be understood more readily by reference to the following detailed description.

### DETAILED DESCRIPTION

In the following specification and the claims, which follow, reference will be made to a number of terms, which shall be defined to have the following meanings.

The singular forms "a", "an" and "the" include plural referents unless the context clearly dictates otherwise.

"Optional" or "optionally" means that the subsequently described event or circumstance may or may not occur, and that the description includes instances where the event occurs and instances where it does not.

Approximating language, as used herein throughout the specification and claims, may be applied to modify any quantitative representation that could permissibly vary without resulting in a change in the basic function to which it is related. Accordingly, a value modified by a term or terms, such as "about", and "substantially" is not to be limited to the precise value specified. In some instances, the approximating language may correspond to the precision of an instrument for measuring the value. Similarly, "free" may be used in combination with a term, and may include an insubstantial number, or trace amounts, while still being considered free of the modified term. Here and throughout the specification and claims, range limitations may be combined and/or interchanged, such ranges are identified and include all the sub-ranges contained therein unless context or language indicates otherwise.

As used herein, the term "aromatic radical" refers to an array of atoms having a valence of at least one comprising at least one aromatic group. The array of atoms having a valence of at least one comprising at least one aromatic group may include heteroatoms such as nitrogen, sulfur, selenium, silicon and oxygen, or may be composed exclusively of carbon and hydrogen. As used herein, the term "aromatic radical" includes but is not limited to phenyl, pyridyl, furanyl, thienyl, naphthyl, phenylene, and biphenyl radicals. As noted, the aromatic radical contains at least one aromatic group. The aromatic group is invariably a cyclic structure having 4n+2 "delocalized" electrons where "n" is an integer equal to 1 or greater, as illustrated by phenyl groups (n = 1), thienyl groups (n = 1), furanyl groups (n = 1), naphthyl groups (n = 2), azulenyl groups (n = 2) and anthraceneyl groups. (n = 3). The aromatic radical may also include nonaromatic components. For example, a benzyl group is an aromatic radical which comprises a phenyl ring (the aromatic group) and a methylene group (the nonaromatic component). Similarly a tetrahydronaphthyl radical is an aromatic radical comprising an aromatic group (C₆H₃) fused to a nonaromatic component -(CH₂)₄-. For convenience, the term "aromatic radical" is defined herein to encompass a wide range of functional groups such as alkyl groups, alkenyl groups, alkynyl groups, haloalkyl groups, haloaromatic groups, conjugated dienyl groups, alcohol groups, ether groups, aldehyde groups, ketone groups, carboxylic acid groups, acyl groups (for example carboxylic acid derivatives such as esters and amides), amine groups and nitro groups. For example, the 4-methylphenyl radical is a C₇ aromatic radical comprising a methyl group, the methyl group being a functional group which is an alkyl group. Similarly, the 2-nitrophenyl group is a C₆ aromatic radical comprising a nitro group, the nitro group being a functional group. Aromatic radicals include halogenated aromatic radicals such as 4-trifluoromethylphenyl, hexafluoroisopropylidenebis(4-phen-1-yloxy) (i.e., - OPhC(CF₃)₂PhO-), 4-chloromethylphen-1-yl, 3-trifluorovinyl-2-thienyl, 3-trichloromethylphen-1-yl (i.e., 3-CCl₃Ph-) and 4-(3-bromoprop-1-yl)phen-1-yl (i.e., 4-BrCH₂CH₂CH₂Ph-). Further examples of aromatic radicals include 4-allyloxyphen-1-oxy, 4-aminophen-1-yl (i.e., 4-H₂NPh-), 3-aminocarbonylphen-1-yl (i.e., NH₂COPh-), 4-benzoylphen-1-yl, dicyanomethylidenebis(4-phen-1-yloxy) (i.e., - OPhC(CN)₂PhO-), 3-methylphen-1-yl, methylenebis(4-phen-1-yloxy) (i.e., - OPhCH₂PhO-), 2-ethylphen-1-yl, phenylethenyl, 3-formyl-2-thienyl, 2-hexyl-5-furanyl, hexamethylene-1,6-bis(4-phen-1-yloxy) (i.e., -OPh(CH₂)₆PhO-), 4-hydroxymethylphen-1-yl (i.e., 4-HOCH₂Ph-), 4-mercaptomethylphen-1-yl (i.e., 4-HSCH₂Ph-), 4-methylthiophen-1-yl (i.e., 4-CH₃SPh-), 3-methoxyphen-1-yl, 2-methoxycarbonylphen-1-yloxy (e.g., methyl salicyl), 2-nitromethylphen-1-yl (i.e., 2-NO₂CH₂Ph), 3-trimethylsilylphen-1-yl, 4-t-butyldimethylsilylphen-1-yl, 4-vinylphen-1-yl and vinylidenebis(phenyl). The term "a C₃ - C₁₀ aromatic radical" includes aromatic radicals containing at least three but no more than 10 carbon atoms. The aromatic radical 1-imidazolyl (C₃H₂N₂-) represents a C₃ aromatic radical. The benzyl radical (C₇H₇-) represents a C₇ aromatic radical.

As used herein the term "cycloaliphatic radical" refers to a radical having a valence of at least one, and comprising an array of atoms which is cyclic but which is not aromatic. As defined herein a "cycloaliphatic radical" does not contain an aromatic group. A "cycloaliphatic radical" may comprise one or more noncyclic components. For example, a cyclohexylmethyl group (C₆H₁₁CH₂-) is a cycloaliphatic radical which comprises a cyclohexyl ring (the array of atoms which is cyclic but which is not aromatic) and a methylene group (the noncyclic component). The cycloaliphatic radical may include heteroatoms such as nitrogen, sulfur, selenium, silicon and oxygen, or may be composed exclusively of carbon and hydrogen. For convenience, the term "cycloaliphatic radical" is defined herein to encompass a wide range of functional groups such as alkyl groups, alkenyl groups, alkynyl groups, haloalkyl groups, conjugated dienyl groups, alcohol groups, ether groups, aldehyde groups, ketone groups, carboxylic acid groups, acyl groups (for example carboxylic acid derivatives such as esters and amides), amine groups and nitro groups. For example, the 4-methylcyclopent-1-yl radical is a C₆ cycloaliphatic radical comprising a methyl group, the methyl group being a functional group which is an alkyl group. Similarly, the 2-nitrocyclobut-1-yl radical is a C₄ cycloaliphatic radical comprising a nitro group, the nitro group being a functional group. A cycloaliphatic radical may comprise one or more halogen atoms which may be the same or different. Halogen atoms include, for example; fluorine, chlorine, bromine, and iodine. Cycloaliphatic radicals comprising one or more halogen atoms include 2-trifluoromethylcyclohex-1-yl, 4-bromodifluoromethylcyclooct-1-yl, 2-chlorodifluoromethylcyclohex-1-yl, hexafluoroisopropylidene-2,2-bis (cyclohex-4-yl) (i.e., -C₆H₁₀C(CF₃)₂ C₆H₁₀-), 2-chloromethylcyclohex-1-yl, 3- difluoromethylenecyclohex-1-yl, 4-trichloromethylcyclohex-1-yloxy, 4-bromodichloromethylcyclohex-1-ylthio, 2-bromoethylcyclopent-1-yl, 2-bromopropylcyclohex-1-yloxy (e.g., CH₃CHBrCH₂C₆H₁₀O-), and the like. Further examples of cycloaliphatic radicals include 4-allyloxycyclohex-1-yl, 4-aminocyclohex-1-yl (i.e., H₂NC₆H₁₀-), 4-aminocarbonylcyclopent-1-yl (i.e., NH₂COC₅H₈-), 4-acetyloxycyclohex-1-yl, 2,2-dicyanoisopropylidenebis(cyclohex-4-yloxy) (i.e., -OC₆H₁₀C(CN)₂C₆H₁₀O-), 3-methylcyclohex-1-yl, methylenebis(cyclohex-4-yloxy) (i.e., -OC₆H_{O}CH₂C₆H₁₀O-), 1-ethylcyclobut-1-yl, cyclopropylethenyl, 3-formyl-2-terahydrofuranyl, 2-hexyl-5-tetrahydrofuranyl, hexamethylene-1,6-bis(cyclohex-4-yloxy) (i.e., -O C₆H₁₀(CH₂)₆C₆H₁₀O-), 4-hydroxymethylcyclohex-1-yl (i.e., 4-HOCH₂C₆H₁₀-), 4-mercaptomethylcyclohex-1-yl (i.e., 4-HSCH₂C₆H₁₀-), 4-methylthiocyclohex-1-yl (i.e., 4-CH₃SC₆H₁₀-), 4-methoxycyclohex-1-yl, 2-methoxycarbonylcyclohex-1-yloxy (2-CH₃OCO₆H₁₀O-), 4-nitromethylcyclohex-1-yl (i.e., NO₂CH₂C₆H₁₀-), 3-trimethylsilylcyclohex-1-yl, 2-t-butyldimethylsilylcyclopent-1-yl, 4-trimethoxysilylethylcyclohex-1-yl (e.g., (CH₃O)₃SiCH₂CH₂C₆H₁₀-), 4-vinylcyclohexen-1-yl and vinylidenebis(cyclohexyl). The term "a C₃ - C₁₀ cycloaliphatic radical" includes cycloaliphatic radicals containing at least three but no more than 10 carbon atoms. The cycloaliphatic radical 2-tetrahydrofuranyl (C₄H₇O-) represents a C₄ cycloaliphatic radical. The cyclohexylmethyl radical (C₆H₁₁CH₂-) represents a C₇ cycloaliphatic radical.

As used herein the term "aliphatic radical" refers to an organic radical having a valence of at least one consisting of a linear or branched array of atoms which is not cyclic. Aliphatic radicals are defined to comprise at least one carbon atom. The array of atoms comprising the aliphatic radical may include heteroatoms such as nitrogen, sulfur, silicon, selenium and oxygen or may be composed exclusively of carbon and hydrogen. For convenience, the term "aliphatic radical" is defined herein to encompass, as part of the "linear or branched array of atoms which is not cyclic" a wide range of functional groups such as alkyl groups, alkenyl groups, alkynyl groups, haloalkyl groups , conjugated dienyl groups, alcohol groups, ether groups, aldehyde groups, ketone groups, carboxylic acid groups, acyl groups (for example carboxylic acid derivatives such as esters and amides), amine groups and nitro groups. For example, the 4-methylpent-1-yl radical is a C₆ aliphatic radical comprising a methyl group, the methyl group being a functional group which is an alkyl group. Similarly, the 4-nitrobut-1-yl group is a C₄ aliphatic radical comprising a nitro group, the nitro group being a functional group. An aliphatic radical may be a haloalkyl group which comprises one or more halogen atoms which may be the same or different. Halogen atoms include, for example; fluorine, chlorine, bromine, and iodine. Aliphatic radicals comprising one or more halogen atoms include the alkyl halides trifluoromethyl, bromodifluoromethyl, chlorodifluoromethyl, hexafluoroisopropylidene, chloromethyl, difluorovinylidene, trichloromethyl, bromodichloromethyl, bromoethyl, 2-bromotrimethylene (e.g., -CH₂CHBrCH₂-), and the like. Further examples of aliphatic radicals include allyl, aminocarbonyl (i.e., - CONH₂), carbonyl, 2,2-dicyanoisopropylidene (i.e., -CH₂C(CN)₂CH₂-), methyl (i.e., - CH₃), methylene (i.e., -CH₂-), ethyl, ethylene, formyl (i.e.,-CHO), hexyl, hexamethylene, hydroxymethyl (i.e.,-CH₂OH), mercaptomethyl (i.e., -CH₂SH), methylthio (i.e., -SCH₃), methylthiomethyl (i.e., -CH₂SCH₃), methoxy, methoxycarbonyl (i.e., CH₃OCO-), nitromethyl (i.e., -CH₂NO₂), thiocarbonyl, trimethylsilyl (i.e., (CH₃)₃Si-), t-butyldimethylsilyl, 3-trimethyoxysilylpropyl (i.e., (CH₃O)₃SiCH₂CH₂CH₂-), vinyl and vinylidene. By way of further example, a C₁ - C₁₀ aliphatic radical contains at least one but no more than 10 carbon atoms. A methyl group (i.e., CH₃-) is an example of a C₁ aliphatic radical. A decyl group (i.e., CH₃(CH₂)₉-) is an example of a C₁₀ aliphatic radical.

As noted, in one embodiment the present invention provides a preform, comprising: (a) a reinforcing fabric layer; and (b) a polyetherimide fiber incorporated into the reinforcing fabric layer as a stitch thread material, wherein the reinforcing fabric layer comprises less than about 5% by weight polyetherimide.

The reinforcing fabric layer can include one or more layers of the woven or felted fibers. In one embodiment, the reinforcing fabric layer can be a braid, or a mat. In one embodiment, the reinforcing fabric layer may include a non-woven fabric of continuous fibers. Examples of the non-woven fibers include but not limited to spunbonding, spunlacing, or fabric mesh. Spunbonded fibers are produced from continuous fibers that are continuously spun and bonded thermally. Spunlaced fibers are prepared from continuous fibers that are continuously spun and bonded mechanically. In one embodiment, the reinforcing fabric layer can include a fiber that is a non-woven mesh fiber. In one embodiment, the reinforcing fabric layer is a non-crimp fabric. As used herein the term "non-crimp fabric" also referred to as "warp-knitted" or "directionally oriented structure fabric" (dos-fabric) refers to one or more layers of fibers laid on each other, and held in place by a secondary non-structural thread without formation of a crimp. In one embodiment, the non-crimp fabric may be unidirectional that is fibers may be oriented in a single direction. In another embodiment, the non-crimp fabric may be multi-axial wherein alternate layers of fibers may be placed in various directions such as 0°, 45°, 90° and -45° to produce a reinforcing fabric layer of optimal strength. When the layers of fibers are aligned at 0°, it refers to the fibers being aligned along the length of the fabric (also known as the "wrap direction"), while the fibers at the 90° layers would be aligned along the width of the fabric (also known as the "weft direction"). The other layers of the fibers in the non-crimp fabric may be aligned at different angles such as +45° or at -45°. Typically, the secondary non-structural thread stitches the layers of the fibers in a variety of orientations to obtain a quasi-isotropic reinforcement. In one embodiment, the stitches run substantially transversely through the layers of fiber and follow a predetermined pattern. In one embodiment, the reinforcing fabric is a carbon non-crimp fabric.

The dimensions of the reinforcing peform layer may be varied according to the particular application targeted for the composition. In one embodiment, the fibers making up the reinforcing preform layer has an areal weight in a range from 100 grams per square meter to 750 grams per square meter. The reinforcing fabric layer comprises less than 10 percent by weight of polyetherimide. In another embodiment, reinforcing fabric layer comprises less than about 1 percent by weight of polyetherimide. In yet another embodiment, reinforcing fabric layer is free of polyetherimide.

As noted, the compositions provided by the present invention comprise a polyetherimide fiber component. The polyetherimide fiber component is incorporated into the reinforcing fabric layer as a stitch thread material. Typically, the polyetherimide fiber component may function as the secondary non-structural thread, employed to stitch the layers of fibers of the reinforcing fabric layer.

In one embodiment, the polyetherimide fiber comprises structural units I 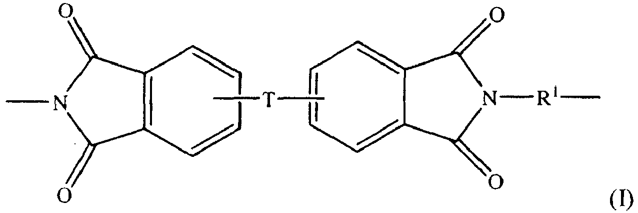 wherein T is a divalent bridging group, selected from the group consisting of a bond, O, S, SO, CO, SO₂, a C₁-C₂₀ aliphatic radical, a C₂-C₂₀ cycloaliphatic radical, and a C₂-C₂₀ aromatic radical; and R¹ is divalent radical selected from a C₁-C₂₀ aliphatic radical, a C₂-C₂₀ cycloaliphatic radical, or a C₂-C₂₀ aromatic radical. Typically, the divalent bridging group T may be attached to the aromatic rings of structural unit I at positions such as the 3,3'; 4,4'; 3,4'; or 4,3'.

In one embodiment, the divalent bridging group T can be a -O-Z-O- wherein Z is a C₁-C₂₀ aliphatic radical, a C₂-C₂₀ cycloaliphatic radical, or a C₂-C₂₀ aromatic radical. In another embodiment, Z comprises structural units II 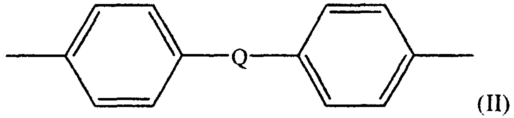 wherein Q includes but is not limited to a divalent moiety selected from the group consisting of is a C₁-C₁₂ aliphatic radical, a C₃-C₁₂ cycloaliphatic radical, a C₄-C₁₈ aromatic radical, —O—, —S—, —C(O)—, —SO₂—, —SO—, —C_{y}H_{2y}— (y being an integer from 1 to 8), and fluorinated derivatives thereof, for example perfluoroalkylene groups. Illustrative examples of the C_{y}H_{2y} group include but are not limited to methylene, ethylene, ethylidene, propylene, and isopropylidene.

In some embodiments, the polyetherimide may be a copolymer. Mixtures of polyetherimides may also be employed. The polyetherimide can be prepared by any of the methods well known to those skilled in the art, including the reaction of an aromatic bis(ether anhydride) with an organic diamine. The polyetherimide fiber comprises structural units derived from a diamine and a bis(ether anhydride).

Examples of specific aromatic bis anhydrides and organic diamines are disclosed, for example, in U.S. Patent Nos. 3,972,902; 4,455,410 and US Patent Application No. 20100048853. Non-limiting examples of suitable bis(ether anhydrides) include: 2,2-bis(4-(3,4-dicarboxyphenoxy)phenyl)propane dianhydride; 4,4'-bis(3,4-dicarboxyphenoxy)diphenyl ether dianhydride. Illustrative examples of aromatic bis anhydrides include hydride; 4,4'-bis(3,4-dicarboxyphenoxy)diphenyl sulfide dianhydride; 4,4'-bis(3,4-dicarboxyphenoxy)benzophenone dianhydride; 4,4'-bis(3,4-dicarboxyphenoxy)diphenyl sulfone dianhydride; 2,2-bis([4-(2,3-dicarboxyphenoxy)phenyl]propane dianhydride; 4,4'-bis(2,3-dicarboxyphenoxy)diphenyl ether dianhydride; 4,4'-bis(2,3-dicarboxyphenoxy)diphenyl sulfide dianhydride; 4,4'-bis(2,3-dicarboxyphenoxy)benzophenone dianhydride; 4,4'-bis(2,3-dicarboxyphenoxy)diphenyl sulfone dianhydride; 4-(2,3-dicarboxyphenoxy)-4'-3,4-dicarboxyphenoxy)diphenyl-2,2-propane dianhydride; 4-(2,3-dicarboxyphenoxy)4'-(3,4-dicarboxyphenoxy)diphenyl ether dianhydride; 4-(2,3-dicarboxyphenoxy)4'-(3,4-dicarboxyphenoxy)diphenyl sulfide dianhydride; 4-(2,3-dicarboxyphenoxy)-4'-(3,4-dicarboxyphenoxy)benzophenone dianhydride; 4-(2,3-dicarboxyphenoxy)-4'-(3,4-dicarboxyphenoxy)diphenyl sulfone dianhydride; and combinations thereof.

In general, any diamine compound may be employed for the synthesis of the polyetherimide fiber. Non-limiting examples of organic diamines include ethylenediamine, propylenediamine, trimethylenediamine, diethylenetriamine, triethylene tetramine, hexamethylenediamine, heptamethylenediamine, octamethylenediamine, nonamethylenediamine, decamethylenediamine, 1,12-dodecanediamine, 1,18-octadecanediamine, 3-methylheptamethylenediamine, 4,4-dimethylheptamethylenediamine, 4-methylnonamethylenediamine, 5-methylnonamethylenediamine, 2,5-dimethylhexamethylenediamine, 2,5-dimethylheptamethylenediamine, 2,2-dimethylpropylenediamine, N-methyl-bis(3-aminopropyl)amine, 3-methoxyhexamethylenediamine, 1,2-bis(3-aminopropoxy)ethane, bis(3-aminopropyl)sulfide, 1,4-cyclohexanediamine, bis-(4-aminocyclohexyl)methane, m-phenylenediamine, p-phenylenediamine, 2,4-diaminotoluene, 2,6-diaminotoluene, m-xylylenediamine, p-xylylenediamine, 2-methyl-4,6-diethyl-1,3-phenylene-diamine, 5-methyl-4,6-diethyl-1,3-phenylenediamine, benzidine, 3,3'-dimethylbenzidine, 3,3'-dimethoxybenzidine, 1,5-diaminonaphthalene, bis(4-aminophenyl)methane, bis(2-chloro-4-amino-3,5-diethylphenyl)methane, bis(4-aminophenyl)propane, 2,4-bis(p-amino-t-butyl)toluene, bis(p-amino-t-butylphenyl)ether, bis(p-methyl-o-aminophenyl)benzene, bis(p-methyl-o-aminopentyl)benzene, 1,3-diamino-4-isopropylbenzene, bis(4-aminophenyl)sulfide, bis-(4-aminophenyl)sulfone, and bis(4-aminophenyl)ether. Mixtures of these compounds may also be used. In some embodiments the organic diamine comprises m-phenylenediamine, p-phenylenediamine, sulfonyl dianiline, or a combination comprising one or more of the foregoing.

Representative polyetherimides may include but are not limited to those produced under the ULTEM® trademark, including, but not limited to ULTEM® 1000 (number average molecular weight (Mn) 21,000 g/mole; Mw 54,000 g/mole; dispersity 2.5), ULTEM® 1010 (Mn 19,000 gmole; Mw 47,000 g/mole; dispersity 2.5), ULTEM CRS 5001, ULTEM CRS 5011 and ULTEM 9011 (Mn 19,000 g/mole; Mw 47,000 g/mole; dispersity 2.5) resin by SABIC Innovative Plastics, Pittsfield, Mass., in the United States of America, described in U.S. Pat. Nos. 3,847,867; 4,650,850; 4,794,157; 4,855,391; 4820,781; and, 4,816,527.

The polyetherimide resin can have a weight average molecular weight (Mw) of about 500 to about 1,000,000 grams per mole (g/mole), in another embodiment a Mw of about 5,000 g/mole to about 500,000 g/mole, and yet in another embodiment from about 10,000 g/mole to about 75,000 g/mole as measured by gel permeation chromatography, using a polystyrene standard.

In one embodiment, the polyetherimide fiber may have a linear density in a range from about 0.1 denier per filament to about 100,000 denier per filament (dpf). In another embodiment, the polyetherimide fiber may have a linear density in a range from about 1 dpf to about 100 dpf.

In one embodiment, the polyetherimide fiber may have an average diameter in a range from 1 micrometers to 1 millimeter (mm). In another embodiment, the polyetherimide fiber may have a diameter in a range from 5 micrometers to 500 micrometer. Typically, the polyetherimide fiber is a continuous filament having a uniform thickness. In one embodiment, the polyetherimide fiber may have an irregular thickness. In one embodiment, the polyetherimide fiber may be of any shape for example circular, triangular, polygonal, multi-lobal or indefinite, including an L-shape, a T-shape, a Y-shape, a W-shape, an octagonal lobal shape, a flat shape and a dog-bone shape. In one embodiment, the polyetherimide fiber may be either solid or hollow.

In one embodiment, the polyetherimide fiber is present in the perform in an amount corresponding to from 0.01 weight percent to 10 weight percent based upon a total weight of the preform. In another embodiment, the polyetherimide fiber is present in the perform in an amount corresponding to from 0.1 weight percent to 1 weight percent based upon a total weight of the preform.

In one aspect the present invention provides an uncured composite composition, comprising a reinforcing fabric layer, a polyetherimide fiber incorporated into the reinforcing fabric layer as a stitch thread material, and an uncured epoxy resin.

Typically, the uncured epoxy resin comprises a reactive monomer having a plurality of epoxy groups. Uncured epoxy resins may be converted to a thermoset upon curing. In one embodiment, the uncured epoxy resin comprises at least one monomer having two epoxy groups, the epoxy resin being converted to a cured epoxy resin upon treatment with a curing agent. Suitable uncured epoxy resins are exemplified by epoxy resins comprising one or more of the following components: polyhydric phenol polyether alcohols, glycidyl ethers of novolac resins such as epoxylated phenol-formaldehyde novolac resin, glycidyl ethers of mononuclear di-and trihydric phenols, glycidyl ethers of bisphenols such as the diglycidyl ether of tetrabromobisphenol A, glycidyl ethers of polynuclear phenols, glycidyl ethers of aliphatic polyols, glycidyl esters such as aliphatic diacid diglycidyl esters, glycidyl epoxies containing nitrogen such as glycidyl amides and amide-containing epoxies, glycidyl derivatives of cyanuric acid, glycidyl resins from melamines, glycidyl amines such as triglycidyl ether amine of p-aminophenol, glycidyl triazines, thioglycidyl ethers, silicon-containing glycidyl ethers, monoepoxy alcohols, glycidyl aldehyde, 2, 2'-diallyl bisphenol A diglycidyl ether, butadiene dioxide, and bis(2,3-epoxycyclopentyl)ether.

Additional epoxy resins which may be employed in the practice of the invention may comprise one or more of the following components: octadecylene oxide, epichlorohydrin, styrene oxide, vinylcyclohexene oxide, glycidyl methacrylate, the diglycidyl ether of Bisphenol A (for example, those available under the trade designations "EPON 828," "EPON 1004," and "EPON 1001 F" from Shell Chemical Co., Houston, Tex., and "DER-332" and "DER-334", from Dow Chemical Co., Midland, Mich.), the diglycidyl ether of Bisphenol F (for example, those under the trade designations "ARALDITE GY281" from Ciba-Geigy Corp., Hawthorne, N.Y., and "EPON 862" from Shell Chemical Co.), vinylcyclohexene dioxide (for example the product designated "ERL 4206" from Union Carbide Corp., Danbury, Conn.), 3,4-epoxycyclohexyl-methyl-3,4-epoxycyclohexene carboxylate (for example the product designated "ERL-4221" from Union Carbide Corp.), 2-(3,4-epoxycyclohexyl-5,5-spiro-3,4-epoxy) cyclohexane-metadioxane (for example the product designated "ERL-4234" from Union Carbide Corp.), bis(3,4-epoxycyclohexyl) adipate (for example the product designated "ERL-4299" from Union Carbide Corp.), dipentene dioxide (for example the product designated "ERL-4269" from Union Carbide Corp.), epoxidized polybutadiene (for example the product designated "OXIRON 2001" from FMC Corp.), epoxy silanes for example, beta-3,4-epoxycyclohexylethyltrimethoxysilane and gamma-glycidyloxypropyltrimethoxysilane, 1,4-butanediol diglycidyl ether (for example the product designated "ARALDITE RD-2" from Ciba-Geigy Corp.), hydrogenated bisphenol A diglycidyl ether (for example the product designated "EPONEX 1510" from Shell Chemical Co.), and polyglycidyl ethers of phenol-formaldehyde novolaks (for example the products designated "DEN-431" and "DEN-438" from Dow Chemical Co.). Additional, non-limiting examples of suitable epoxy resins include the toughened epoxy resin, "Cycom 977-2" and epoxy resins "Cycom 977-20", "Cycom PR520" and "Cycom 5208" available commercially from Cytec Engineered Materials Inc., (Tempe, Arizona); "HexFLow RTM-6", "HexFlow VRM 34", a two-part, amine-cured epoxy system from Hexcel (Dublin, CA), and "LX70412.0" available from Henkel-Loctite (BayPoint, CA).

In one embodiment, the uncured epoxy resin is present in the composite composition in an amount corresponding to from 1 0 weight percent to 80 weight percent based upon a total weight of the composite composition. In another embodiment, the uncured epoxy resin is present in the composite composition in an amount corresponding to from 20 weight percent to 60 weight percent based upon a total weight of the composite composition. In one embodiment, the polyetherimide fiber is present in the composite composition in an amount corresponding to from 25 weight percent to 50 weight percent based upon a total weight of the composite composition.

In one embodiment, the present invention provides a cured composite composition, comprising a reinforcing fabric layer, a polyetherimide fiber incorporated into the reinforcing fabric layer as a stitch thread material and a cured epoxy resin. It may be noted that the cured composite composition includes structural units derived from a formulation comprising an uncured epoxy resin. As noted the cured composite composition provided by the present invention may be prepared by the infusion into a fiber component of a composition comprising a reinforcing fabric, a polyetherimide fiber and an uncured epoxy resin. In one aspect, the present invention provides such formulations which are especially suitable for use in the preparation of cured composite compositions owing to the relatively low viscosities of such formulations. In one embodiment, the formulation used to prepare the cured composite composition has especially good viscosity characteristics for completely and uniformly contacting the fiber component in a process at times referred to herein as resin infusion. In one embodiment, the infusion is carried out using the vacuum assisted resin transfer method (hereinafter also known as "VARTM"). In one embodiment, formulation comprising the uncured epoxy, the reinforcing fabric and the polyetherimide fiber has a viscosity in a range from 10 centiPoise to 2500 centiPoise at the temperature at which the infusion step is to be carried out (the infusion temperature). In another embodiment, the formulation has a viscosity in a range from 25 centiPoise to 500 centiPoise at the infusion temperature. Typically the infusion temperature is in a range from 20 °C to 150°C, although lower infusion temperatures and higher infusion temperatures may also be used. In one embodiment, the method further includes curing the uncured composite composition to provide a cured composite.

The composition comprising the reinforcing fabric, polyetherimide fiber and the cured epoxy is in certain embodiments characterized by an observable glass transition of either or both of the continuous and discontinuous phases. In one embodiment, the cured composite composition exhibits a glass transition temperature (Tg) which is greater than about 180 °C.

The cured composite compositions provided by the present invention are in certain embodiments especially resistant to crack formation. In one embodiment, the composite composition has a microcrack density less than about 5 microcracks per cm² on the cross-section of a standard test coupon after 2000 cycles of the thermal-humidity test in a range from -54 °C to 71 °C. In another embodiment, each microcrack observed in test coupons cut through at 0°, 90° and 45° following the test protocol is less than 800 µm long.

As will be appreciated by those of ordinary skill in the art, the cured composite compositions provided by the present invention will be widely applicable in the manufacture of articles requiring the outstanding performance properties as disclosed herein. In various embodiments, articles comprising the cured composite composition of the present invention are expected to be especially useful in aviation and aerospace applications requiring a combination of high strength and light weight. Thus, it is anticipated that the cured composite compositions of the present invention will be useful in the manufacture of strong lightweight parts for aircraft, for example wings, fuselages, and aircraft engine turbine blades. Other promising applications for the cured composite composition provided by the present invention include load bearing structures in spacecraft, load bearing structures in automobiles, construction materials such as beams and roofing materials, personal communication devices such as cell phones, furniture such as tables and chairs, sporting goods such as tennis racquets and golf clubs, seating for sports facilities, load bearing structures in train carriages and locomotives, load bearing structures in personal watercraft, sail boats, and ships, and non-load bearing structures requiring a combination of high strength and light weight in any of the forgoing applications.

### EXAMPLES

The following examples illustrate methods and embodiments in accordance with the invention.

### Method 1: Stitching of the Non-crimp fabric with fibers

The polyester stitches from a carbon non-crimp fabric obtained from Hexcel, Dublin, CA (T700GC, +60°/0°/0°/-60°) was removed from the fabric. The non-crimp fabric with polyetherimide stitches was prepared by manually stitching the polyetherimide fibers into the non-crimp fabric from Hexcel. Similar non-crimp fabric with manually stitched polyester stitches into the non-crimp fabric from Hexcel and non-crimp fabric with manually stitched nylon stitches were prepared into the non-crimp fabric from Hexcel were prepared. The stitch tightness and the stitch pattern were identical for the above three non-crimp fabric prepared.

### Example 1: Preparation of Cured Composite Composition by Vacuum Assisted Resin Transfer Molding (VARTM) Process

Five to seven plies of the non-crimp fabric with polyetherimide stitches were layered and were sealed in a nylon vacuum bag film enclosure comprising a resin inlet and outlet under full vacuum (101.6 KPa) (∼ 30 in Hg). A secondary bag was used to ensure a proper vacuum seal. RTM6 epoxy resin (from Hexcel, Dublin, CA) was heated to 80 °C and degassed under vacuum in a feed chamber. Prior to infusion, the vacuum on the feed chamber was reduced to ∼ 33.8 KPa (∼ 10 in Hg). The resin infusion into the fiber structure was started and the infusion was typically run at a temperature of 90°C. Resin flow was monitored during the infusion process which required about 30 minutes at the end of which time the resin was observed on the vacuum outlet to eliminate the air voids in the panel. Both inlet and outlet tubes were pinched off using Stapla tube sealer in order to maintain the high level of vacuum in the assembly. The resin-filled assembly was cured at 180 °C for 2 under vacuum to provide a void-free panel comprising the cured composite composition.

### Comparative Examples:

Comparative examples (CEx.1 and CEx.2) were prepared using the process described above except that the non-crimp fabric used comprised nylon stitches in the case of CEx.1 while the non-crimp fabric comprised polyester stitches in the CEx.2.

### Method 2: Thermal Shock Cycling And Microcrack Analysis

After infusion, the composite parts were cut with a water jet and subjected to thermal shock cycling. The thermal shock chamber consisted of two compartments each maintained at a temperature of about 71°C and a temperature of about -54°C respectively. The parts were placed in each of the thermal shock chambers for a duration of five minutes, which constituted one cycle. The parts were subjected to about 400 to 2000 such cycles. Following the treatment in the thermal shock chambers, the treated parts were checked under an optical microscope for the presence of microcracks. The microcracks formed were analyzed using an optical microscope with a magnification of 50x and automated image analysis software. The microcrack number and lengths were determined in a total cross-section of 13.97 cm by 3.19 mm (5.5" by 1/8").

**Table 1.**

| Entry | Stitch Thread Material | Stitch Thread Diameter (µm) | % Stitch Thread (as a % of the weight of the fiber mat, or equivalent) | Performance Rating |
|---|---|---|---|---|
| Ex-1 | PEI | 90 - 100 | < 0.5 | +++ |
| CEx.1 | Nylon | 100- 150 | < 0.5 | --- |
| CEx.2 | PET (polyester) | 150 | < 0.5 | --- |

| | | | | |
|---|---|---|---|---|
| +++ = fewer than 5 microcracks after 2000 cycles; --- = more than 50 microcracks after 2000 cycles | | | | |

The data from Table 1 shows that the composites with the polyetherimide stitches did not show any microcrack even after thermal shock treatment for 2000 thermal cycles. While the composites of CEx.1 and CEx.2 displayed microcrack formation when subjected to thermal shock treatment of 400 thermal cycles. Additionally, it was also observed that the polyetherimide offers good compatibility with epoxy resins than polyesters and nylons. Furthermore, the glass transition temperature of the polyetherimide fibers (Tg > 210°C) is higher than the curing temperature (∼180°C) for most aerospace rated epoxy systems resulting in the polyetherimide stitches having a lower coefficient of thermal expansion during curing process, thereby, contributing less residual stress within resin pocket area where stitches located and leading to a microcrack resistant composite composition. The cured composite compositions provided by the present invention exhibit excellent microcrack resistance under thermal humidity cycles (Ex. 1).

The foregoing examples are merely illustrative, serving to exemplify only some of the features of the invention. The appended claims are intended to claim the invention as broadly as it has been conceived and the examples herein presented are illustrative of selected embodiments from a manifold of all possible embodiments. Accordingly, it is the Applicants' intention that the appended claims are not to be limited by the choice of examples utilized to illustrate features of the present invention. As used in the claims, the word "comprises" and its grammatical variants logically also subtend and include phrases of varying and differing extent such as for example, but not limited thereto, "consisting essentially of" and "consisting of." Where necessary, ranges have been supplied; those ranges are inclusive of all sub-ranges there between. It is to be expected that variations in these ranges will suggest themselves to a practitioner having ordinary skill in the art and where not already dedicated to the public, those variations should where possible be construed to be covered by the appended claims. It is also anticipated that advances in science and technology will make equivalents and substitutions possible that are not now contemplated by reason of the imprecision of language and these variations should also be construed where possible to be covered by the appended claims.

## Claims

1. A preform, comprising:
(a) a reinforcing fabric layer; and
(b) a polyetherimide fiber incorporated into the reinforcing fabric layer as a stitch thread material;
wherein the reinforcing fabric layer comprises less than 10% by weight polyetherimide.

2. The preform according to claim 1, wherein the polyetherimide fiber comprises structural units I 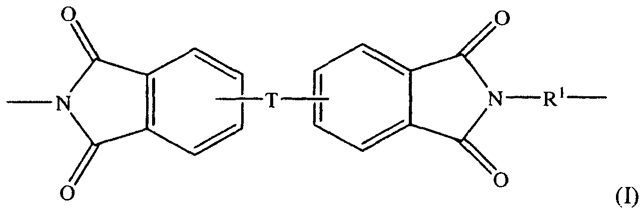 wherein T is a divalent bridging group selected from the group consisting of a bond, O, S, SO, CO, SO₂, a C₁-C₂O aliphatic radical, a C₂-C₂₀ cycloaliphatic radical, and a C₂-C₂₀ aromatic radical; and R¹ is a divalent radical selected from a C₁-C₂₀ aliphatic radical, a C₂-C₂₀ cycloaliphatic radical, or a C₂-C₂₀ aromatic radical.

3. The preform according to claim 1 or claim 2, wherein the polyetherimide fiber is present in the preform in an amount in a range of from 0.01 weight percent to 10 weight percent based upon a total weight of the preform.

4. The preform according to any preceding claim, wherein the polyetherimide fiber has an average diameter in a range of from 5 micrometers to 500 micrometers.

5. The preform according to any preceding claim, wherein the polyetherimide fiber has a molecular weight in a range from 10,000 gram per mole to 75,000 gram per mole.

6. The preform according to any preceding claim, wherein the reinforcing fabric layer comprises a non-crimp fabric.

7. The preform according to any preceding claim, wherein the reinforcing fabric layer is free of polyetherimide.

8. An uncured composite composition, comprising:
(a) a reinforcing fabric layer;
(b) a polyetherimide fiber incorporated into the reinforcing fabric layer as a stitch thread material;
(c) an uncured epoxy resin; and
wherein the reinforcing fabric layer comprises less than 10% by weight polyetherimide.

9. The uncured composite composition according to claim 8, wherein the polyetherimide fiber comprises structural units I 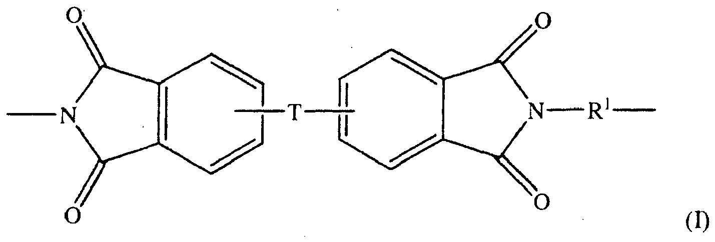 wherein T is a divalent bridging group selected from the group consisting of a bond, O, S, SO, CO, SO₂, a C₁-C₂₀ aliphatic radical, a C₂-C₂₀ cycloaliphatic radical, and a C₂-C₂₀ aromatic radical; and R¹ is a C₁-C₂₀ aliphatic radical, a C₂-C₂₀ cycloaliphatic radical, or a C₂-C₂₀ aromatic radical.

10. A method, comprising:
(a) contacting a formulation comprising an uncured epoxy resin with a reinforcing fabric layer to provide an uncured composite composition, wherein the reinforcing fabric layer comprises a polyetherimide fiber incorporated therein as a stitch thread material; and wherein the reinforcing fabric layer comprises less than 10% by weight polyetherimide.

11. The method according to claim 10, comprising curing the uncured composite composition to provide a cured composite.

12. The method according to claim 10 or claim 11, wherein the contacting is carried out by infusing the uncured epoxy resin into the reinforcing fabric layer at an infusion temperature in a range of from 20 degrees Celsius to 140 degrees Celsius.

13. The method according to any one of claims 10 to 12, wherein the contacting is carried out under vacuum assisted resin transfer method conditions at an infusion temperature

14. A cured composite, comprising:
a) a reinforcing fabric layer;
(b) a polyetherimide fiber incorporated into the reinforcing fabric layer as a stitch thread material;
(c) a cured epoxy resin; and
wherein the reinforcing fabric layer comprises less than 10% by weight polyetherimide.

15. An article, comprising the cured composite of claim 14.

## Patentansprüche

1. Vorform, umfassend:
(a) eine verstärkende Gewebeschicht und
(b) eine Polyetherimidfaser, die in die verstärkende Gewebeschicht als ein Stichfadenmaterial eingearbeitet ist;
worin die verstärkende Gewebeschicht weniger als 10 Gew.-% Polyetherimid umfasst.

2. Vorform nach Anspruch 1, worin die Polyetherimidfaser Struktureinheiten I umfasst 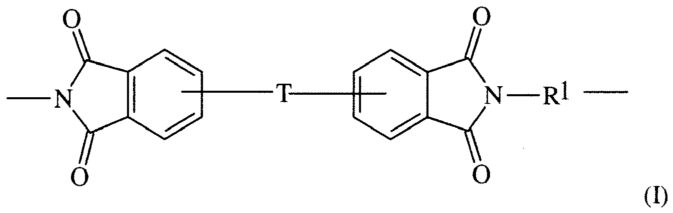 worin T eine zweiwertige Brückengruppe ist, ausgewählt aus der Gruppe bestehend aus einer Bindung, O, S, SO, CO, SO₂, einem aliphatischen C₁-C₂₀-Rest, einem cycloaliphatischen C₂-C₂₀-Rest und einem aromatischen C₂-C₂₀-Rest und R¹ ein zweiwertiger Rest ist, ausgewählt aus einem aliphatischen C₁-C₂₀-Rest, einem cycloaliphatischen C₂-C₂₀-Rest oder einem aromatischen C₂-C₂₀-Rest.

3. Vorform nach Anspruch 1 oder Anspruch 2, worin die Polyetherimidfaser in der Vorform in einer Menge in einem Bereich von 0,01 Gew.-% bis 10 Gew.-%, bezogen auf das Gesamtgewicht der Vorform, vorhanden ist.

4. Vorform nach irgendeinem vorhergehenden Anspruch, worin die Polyetherimidfaser einen mittleren Durchmesser in einem Bereich von 5 µm bis 500 µm aufweist.

5. Vorform nach irgendeinem vorhergehenden Anspruch, worin die Polyetherimidfaser ein Molekulargewicht in einem Bereich von 10.000 g/Mol bis 75.000 g/Mol aufweist.

6. Vorform nach irgendeinem vorhergehenden Anspruch, worin die verstärkende Gewebeschicht ein ungekräuseltes Gewebe umfasst.

7. Vorform nach irgendeinem vorhergehenden Anspruch, worin die verstärkende Gewebeschicht frei von Polyetherimid ist.

8. Ungehärtete Verbundzusammensetzung, umfassend:
(a) eine verstärkende Gewebeschicht;
(b) eine Polyetherimidfaser, die als ein Stichfadenmaterial in die verstärkende Gewebeschicht eingearbeitet ist;
(c) ein ungehärtetes Epoxyharz, und
worin die verstärkende Gewebeschicht weniger als 10 Gew.-% Polyetherimid umfasst.

9. Ungehärtete Verbundzusammensetzung nach Anspruch 8, worin die Polyetherimidfaser Struktureinheiten I umfasst 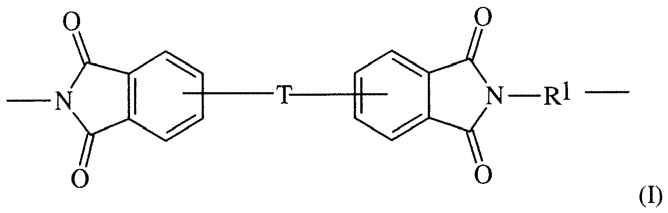 worin T eine zweiwertige Brückengruppe ist, ausgewählt aus der Gruppe bestehend aus einer Bindung, O, S, SO, CO, SO₂, einem aliphatischen C₁-C₂₀-Rest, einem cycloaliphatischen C₂-C_{2O}-Rest und einem aromatischen C₂-C₂₀-Rest und R¹ ein zweiwertiger Rest ist, ausgewählt aus einem aliphatischen C₁-C₂₀-Rest, einem cycloaliphatischen C₂-C₂₀-Rest oder einem aromatischen C₂-C₂₀-Rest.

10. Verfahren, umfassend:
(a) Kontaktieren einer Formulierung, umfassend ein ungehärtetes Epoxyharz mit einer verstärkenden Gewebeschicht zur Schaffung einer ungehärteten Verbundzusammensetzung, wobei die verstärkende Gewebeschicht eine Polyetherimidfaser umfasst, die darin als ein Stichfadenmaterial eingearbeitet ist, und worin die verstärkende Gewebeschicht weniger als 10 Gew.-% Polyetherimid umfasst.

11. Verfahren nach Anspruch 10, umfassend das Härten der ungehärteten Verbundzusammensetzung zur Schaffung eines gehärteten Verbundmaterials.

12. Verfahren nach Anspruch 10 oder Anspruch 11, worin das Kontaktieren ausgeführt wird durch Eingießen des ungehärteten Epoxyharzes in die verstärkende Gewebeschicht bei einer Eingießtemperatur in einem Bereich von 20°C bis 140°C.

13. Verfahren nach irgendeinem der Ansprüche 10 bis 12, worin das Kontaktieren ausgeführt wird unter vakuumunterstützten Harzübertragungsverfahrens-Bedingungen bei einer Eingießtemperatur.

14. Gehärtetes Verbundmaterial, umfassend:
(a) eine verstärkende Gewebeschicht;
(b) eine Polyetherimidfaser, die als ein Stichfadenmaterial in die verstärkende Gewebeschicht eingearbeitet ist;
(c) ein gehärtetes Epoxyharz, und
worin die verstärkende Gewebeschicht weniger als 10 Gew.-% Polyetherimid umfasst.

15. Gegenstand, umfassend das gehärtete Verbundmaterial von Anspruch 14.

## Revendications

1. Préforme comprenant :
a) une couche d'étoffe de renfort,
b) et de la fibre de poly(éther imide) incorporée dans la couche d'étoffe de renfort, en tant que matériau de fil de piquage ;
dans laquelle préforme la couche d'étoffe de renfort comprend moins de 10 % en poids de poly(éther imide).

2. Préforme conforme à la revendication 1, dans laquelle la fibre de poly(éther imide) comporte des motifs structuraux de formule I : 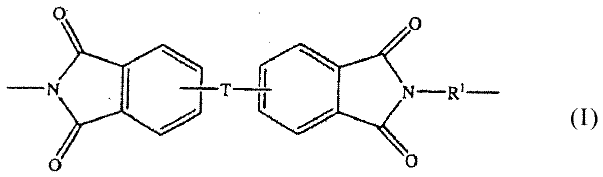 dans laquelle T représente un fragment pontant divalent choisi dans l'ensemble formé par une liaison, un chaînon symbolisé par O, S, SO, CO ou SO₂, un groupe aliphatique en C₁-C₂₀, un groupe cycloaliphatique en C₂-C₂₀ et un groupe aromatique en C₂-C₂₀, et R¹ représente un groupe divalent choisi parmi un groupe aliphatique en C₁-C₂₀, un groupe cycloaliphatique en C₂-C₂₀, et un groupe aromatique en C₂-C₂₀.

3. Préforme conforme à la revendication 1 ou 2, dans laquelle la fibre de poly(éther imide) se trouve présente dans la préforme en une proportion située dans l'intervalle allant de 0,01 à 10 %, en poids rapporté au poids total de la préforme.

4. Préforme conforme à l'une des revendications précédentes, dans laquelle la fibre de poly(éther imide) présente un diamètre moyen situé dans l'intervalle allant de 5 micromètres à 500 micromètres.

5. Préforme conforme à l'une des revendications précédentes, dans laquelle le poly(éther imide) de la fibre présente une masse molaire située dans l'intervalle allant de 10 000 grammes par mole à 75 000 grammes par mole.

6. Préforme conforme à l'une des revendications précédentes, dans laquelle la couche d'étoffe de renfort comprend un tissu sans ondulations (« non crimp fabric »).

7. Préforme conforme à l'une des revendications précédentes, dans laquelle la couche d'étoffe de renfort ne comprend pas de poly-(éther imide).

8. Composition de composite non-durcie, comprenant :
a) une couche d'étoffe de renfort,
b) de la fibre de poly(éther imide) incorporée dans la couche d'étoffe de renfort, en tant que matériau de fil de piquage,
c) et une résine époxy non durcie ;
dans laquelle composition la couche d'étoffe de renfort comprend moins de 10 % en poids de poly(éther imide).

9. Composition de composite non-durcie, conforme à la revendication 8, dans laquelle la fibre de poly(éther imide) comporte des motifs structuraux de formule 1 : 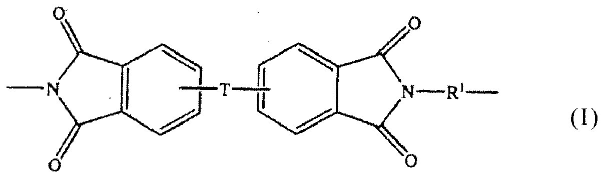 dans laquelle T représente un fragment pontant divalent choisi dans l'ensemble formé par une liaison, un chaînon symbolisé par O, S, SO, CO ou SO₂, un groupe aliphatique en C₁-C₂₀, un groupe cycloaliphatique en C₂-C₂₀ et un groupe aromatique en C₂-C₂₀, et R¹ représente un groupe aliphatique en C₁-C₂₀, un groupe cycloaliphatique en C₂-C₂₀, ou un groupe aromatique en C₂-C₂₀.

10. Procédé comprenant :
a) le fait de mettre une formulation, comprenant une résine époxy non-durcie, en contact avec une couche d'étoffe de renfort, pour obtenir une composition de composite non-durcie,
dans lequel la couche d'étoffe de renfort comprend de la fibre de poly-(éther imide) incorporée en son sein, en tant que matériau de fil de piquage, et dans lequel la couche d'étoffe de renfort comprend moins de 10 % en poids de poly(éther imide).

11. Procédé conforme à la revendication 10, comprenant le fait de faire durcir la composition de composite non-durcie pour obtenir un composite durci.

12. Procédé conforme à la revendication 10 ou 11, dans lequel on opère la mise en contact en introduisant par imprégnation la résine époxy non-durcie dans la couche d'étoffe de renfort, à une température d'imprégnation située dans l'intervalle allant de 20 °C à 140 °C.

13. Procédé conforme à l'une des revendications 10 à 12, dans lequel on opère la mise en contact dans des conditions de procédé de transfert de résine assisté sous vide, à une température d'imprégnation.

14. Composite durci, comprenant :
a) une couche d'étoffe de renfort,
b) de la fibre de poly(éther imide) incorporée dans la couche d'étoffe de renfort, en tant que matériau de fil de piquage,
c) et une résine époxy durcie ;
dans lequel composite la couche d'étoffe de renfort comprend moins de 10 % en poids de poly(éther imide).

15. Article comprenant un composite durci conforme à la revendication 14.
